# FASCICULE DE BREVET EUROPEEN

(11) **EP 0 697 248 B1**
(45) Date de publication et mention de la délivrance du brevet: **20.09.2000**
(21) Numéro de dépôt: 95401899.0
(22) Date de dépôt: 16.08.1995
(51) Int. Cl.: B01L 3/00, B01L 11/00

(54) **Boîtier à branchement automatique pour distribution de réactifs dans un appareil notamment un analyseur hématologique**
Automatisch kuppelbares Gehäuse zur Abgabe von Reagenzien in einem Gerät, insbesondere einem Blutanalysator
Reagent distribution housing for automatic connection to an apparatus such as a blood analyser

(30) Priorité: 18.08.1994 FR 9410106
(43) Date de publication de la demande: 21.02.1996
(73) Titulaire: ABX , Société Anonyme dite, F-34184 Montpellier Cédex 4 (FR)
(72) Inventeur: Robert, Jean-Edouard, F-92200 Neuilly sur Seine (FR); Le Comte, Roger, F-34280 Carnon (FR); Champseix, Henri, F-34980 Montferrier S/Lez (FR)
(74) Mandataire: Lhuillier, René

(56) Documents cités:
- EP-A- 0 192 794
- EP-A- 0 431 352
- US-A- 3 647 386
- US-A- 5 031 797
- US-A- 5 279 797

## Description

L'invention se rapporte à un analyseur hématologique et concerne plus particulièrement un dispositif comportant un boîtier à branchement automatique pour la distribution des réactifs dans ledit analyseur, selon la revendication 1.

On sait que ces appareils ne peuvent fonctionner sans faire usage de réactifs liquides qui sont, -au minimum-, un diluant isotonique, un agent de lyse et un détergent. Ces produits sont traditionnellement conditionnés dans des bouteilles ou conteneurs et pour les utiliser, il convient de les prélever dans chaque conteneur par des tuyaux souples qui se prolongent par des cannes pour pouvoir plonger au fond des réservoirs. Il faut aussi que l'air puisse rentrer dans chaque conteneur. La mise en route de l'analyseur est ainsi assujettie à des manoeuvres délicates de branchement ; en outre, une fois raccordé, l'analyseur avec ses tuyaux souples et lesdits réservoirs annexes s'avère plus difficilement déplaçable.

C'est notamment pour éviter cet inconvénient que la Demanderesse a mis au point un système de stockage compact et de distribution de réactifs qui s'applique sur un côté de l'appareil et assure de façon automatique la connexion des réservoirs de produits avec l'analyseur. De surcroît le dispositif en question assure la connexion des déchets à un conteneur particulier, sans augmentation du volume de l'ensemble.

Le document US-A-5 031 797 décrit un boîtier comprenant une cartouche divisée par des parois dans plusieurs compartiments à réactif, insérable dans un système receveur, qui est introduit dans l'analyseur.

Un objet principal de l'invention consiste donc en un dispositif comportant un boîtier distributeur de réactifs et un appareil notamment un analyseur hématologique, ledit boîtier renfermant au moins une pluralité de poches souples rétractables et sans prise d'air remplies de réactif et orientées vers le bas dont les organes d'obturation affleurent à la base dudit boîtier, et ledit boîtier étant dimensionné pour s'adapter sur le côté d'un appareil et assurer la connexion des poches de réactif par ouverture de leur organes d'obturation.

Le boîtier renferme également une poche souple rétractable à déchets orientée vers le haut.

Le boîtier distributeur de réactifs se place sur une plaque support horizontale qui coulisse sur le côté de l'appareil, des mécanismes d'ouverture des organes d'obturation orientés vers le haut traversant des orifices de ladite plaque support. Les mécanismes d'ouverture sont des aiguilles métalliques de perçage pour des bouchons perforables ou des plots fixes venant en appui contre un organe d'obturation faisant office de clapet qui ferme un puits central du bouchon. En outre, une patte articulée au sommet de l'analyseur maintient en place le boîtier distributeur de réactifs sur la plaque et peut servir de logement à un tuyau d'alimentation de la poche à déchets dont le goulot débouche à la partie supérieure du boîtier distributeur de réactifs.

D'autres caractéristiques et avantages de l'invention ressortiront de la description qui va suivre d'un exemple non limitatif de réalisation dans lequel il est fait référence aux dessins annexés qui représentent :
figure 1, une vue éclatée en perspective et partiellement écorchée de l'analyseur
figure 2, une vue en perspective du boîtier distributeur de réactifs en position ouverte
figures 3 et 4, des vues d'un organe d'obturation faisant office de clapet pour le bouchon des poches de réactif, respectivement en position fermée et ouverte
figures 5 et 6 des vues d'un organe d'obturation du bouchon d'une poche à déchets respectivement en position fermée et ouverte.

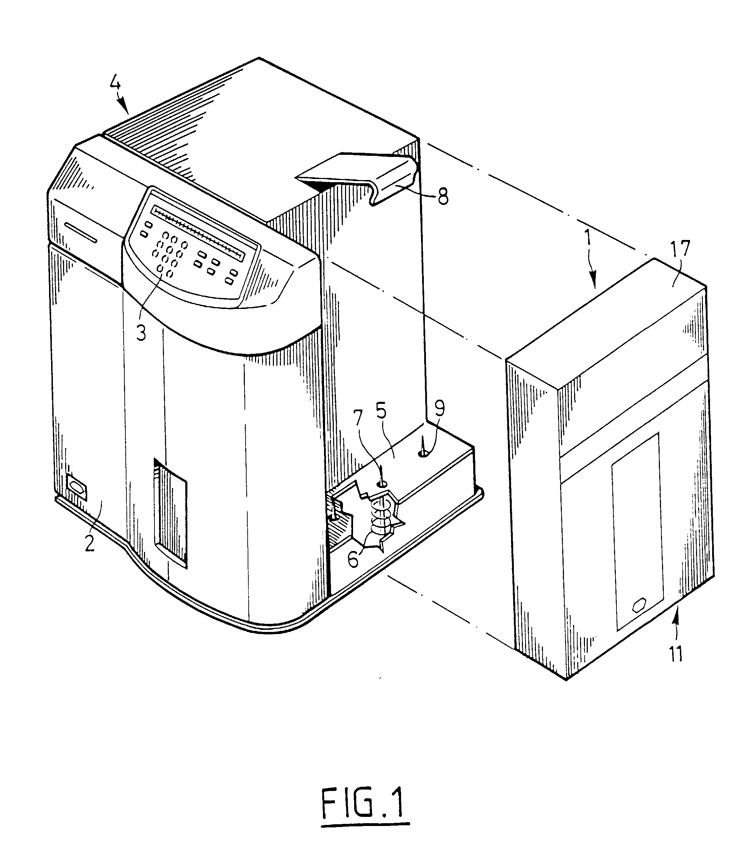

On voit à la figure 1, un analyseur hématologique 4 de forme parallélipipédique dont la face avant 2 porte un tableau 3 de commande et de visualisation. Le boîtier distributeur de réactifs, désigné dans son ensemble par la référence 1 se place sur le côté de l'appareil. Il est amovible et dimensionné pour s'adapter sur celui-ci en prolongeant ses contours. Il vient en appui sur une plaque support horizontale 5 montée coulissante sur des ressorts 6 qui la maintiennent en position haute. Des aiguilles métalliques fixes 7 orientées vers le haut traversent des petits orifices 9 prévus dans la plaque support. Elles sont reliées par des tubes non visibles aux dispositifs de mesure placés à l'intérieur de l'analyseur 4. A la partie supérieure, une patte 8 articulée au sommet de l'analyseur, maintient en place le boîtier. Selon une variante de réalisation non représentée, la patte 8 peut faire toute la largeur de l'appareil. Avantageusement, elle pourrait être plus épaisse pour loger un tuyau d'alimentation d'une poche à déchets dont il sera question plus loin.

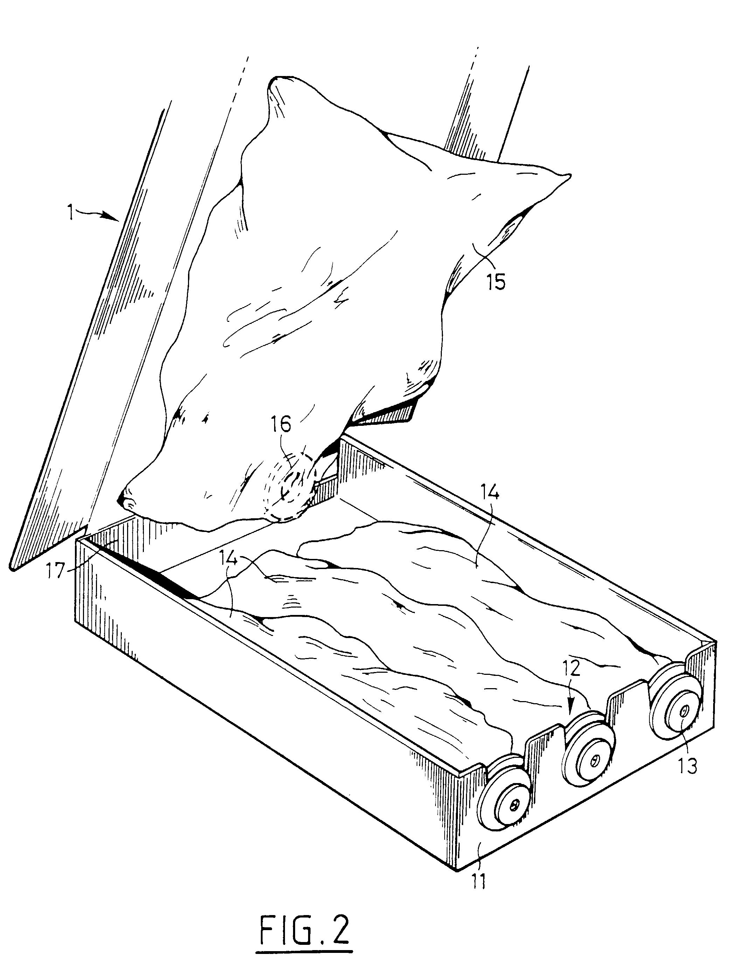

La figure 2 montre un boîtier distributeur 1 se présentant par exemple comme un récipient dont la partie inférieure 11, destinée à reposer sur la plaque 5, est équipée au droit des aiguilles 7 d'échancrures 12 dans lesquelles se positionnent des bouchons perforables en silicone 13 qui obturent chacun une poche souple correspondante 14. Les bouchons perforables 13 affleurent donc à la base du boîtier. En l'occurrence, il y a à l'intérieur du boîtier trois poches souples de volumes différents renfermant chacune un réactif. Ces poches 14 sont du type de celles utilisées par exemple pour le conditionnement du vin dont on sait qu'elles peuvent se rétracter à mesure qu'elles se vident. Ces poches 14 sont donc disposées, goulot vers le bas dans le réceptacle 1 ; elles sont représentées vides sur la figure. Ledit boîtier distributeur renferme aussi une autre poche souple 15 de volume un peu plus grand, dont le goulot 16 est orienté vers le haut et débouche au niveau d'une échancrure de la partie supérieure 17 dudit boîtier. Cette poche est destinée à recueillir les déchets de comptage , éventuellement grâce à un tuyau logé à l'intérieur de la patte de maintien.

Pour la mise en fonctionnement de l'appareil, les trois poches souples 14 sont donc remplies chacune de leur réactif et elles se positionnent à l'intérieur du même boîtier 1 dont elles occupent à peu près tout le volume. Par contre, la poche souple à déchets 15 est vide et comprimée à l'intérieur du réceptacle par les poches de réactif.

Le boîtier 1 ainsi garni, se met en place aisément sur le côté de l'analyseur 4, sa face inférieure 11 étant placée sur la plaque 5. Sous l'effet du poids du boîtier, et en exerçant un appui complémentaire, la plaque 5 descend en comprimant les ressorts 6 et lors de ce mouvement les aiguilles 7 percent automatiquement les bouchons 13 de chaque poche 14. Les réactifs correspondant se trouvent ainsi raccordés à l'analyseur. Les liquides peuvent donc être transférés à la machine. Une fois que le boîtier a terminé sa course sur la plaque 5, l'utilisateur peut le verrouiller contre l'analyseur à l'aide de la patte 8.

Au fur et à mesure que les poches 14 se vident, elles se contractent et simultanément la poche à déchets 15 se remplit et se gonfle par son tuyau d'alimentation. Le volume d'ensemble des produits contenus dans le boîtier 1 reste donc constant.

En fin d'utilisation des réactifs, on désolidarise, par une manoeuvre inverse, le boîtier de l'analyseur.

Pour l'utilisateur les manipulations sont ainsi très simplifiées et pas plus longues que s'il n'avait qu'un seul réactif à raccorder.

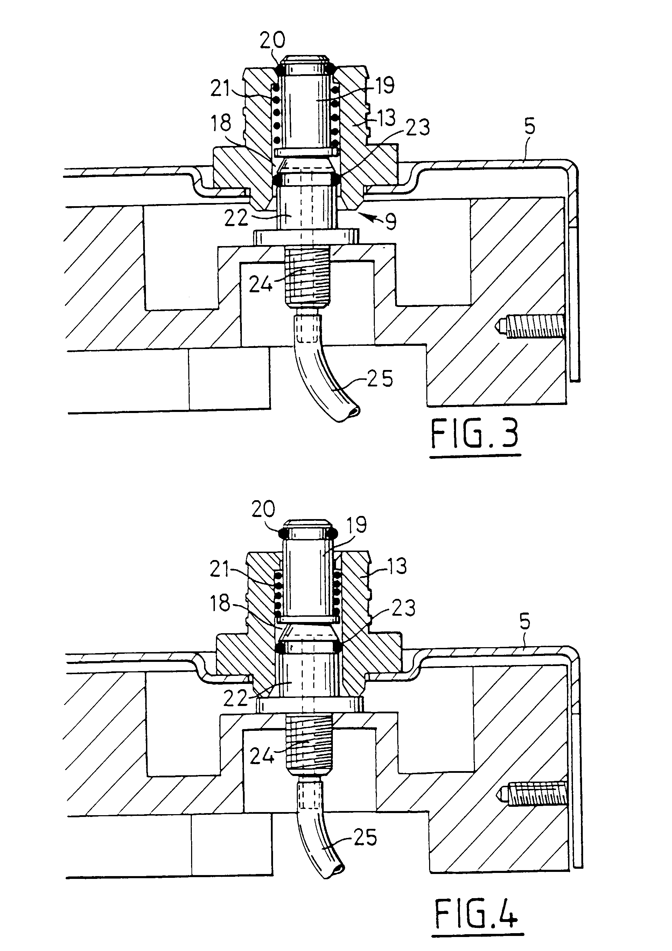

Les figures 3 et 4 illustrent un autre mode de réalisation de l'invention permettant la connexion rapide des poches du boîtier sans nécessité d'utiliser des aiguilles de perforation. Pour cela, le bouchon 13 n'est plus un bouchon plein en silicone mais il est ouvert d'un puits central 18 à l'intérieur duquel peut se déplacer un organe d'obturation 19 du puits en question, dont la tête est équipée d'un joint torique 20 s'appuyant sur l'orifice profilé du puits 18. L'organe d'obturation 19 faisant office de clapet est maintenu dans la position fermée de la figure 3 grâce au ressort 21. La partie extérieure du bouchon 13 est emboîtée dans le goulot d'une poche souple de réactif.

Sur l'appareil destiné à recevoir le boîtier de réactifs, on retrouve la plaque mobile 5. Mais chaque aiguille de perforation est remplacée par un plot fixe 22 équipé d'un joint 23 qui déborde d'un orifice 9 de la plaque 5. Le plot est traversé d'un conduit interne 24 en liaison avec un tuyau 25 d'amenée de réactif à l'appareil. Quand on met en place le boîtier de réactifs sur la plaque 5, l'extrémité du plot 22 pénètre dans le puits central 18 du bouchon 13 et vient en butée contre la base de l'organe d'obturation 19.

Au fur et à mesure que la plaque support 5 descend (figure 4), le plot 22 pousse l'organe d'obturation 19 à l'encontre de la force du ressort 21 et dégage le joint 20 du puits 18. Le réactif peut donc s'écouler dans le puits et de là, dans le conduit 24 et le tuyau 25.

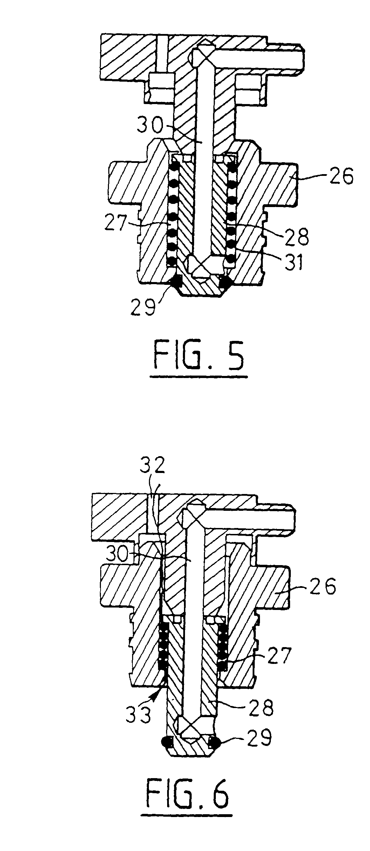

Pour la poche à déchets, on peut utiliser un organe d'obturation un peu semblable à celui des poches de réactifs, comme on le voit aux figures 5 et 6. La poche à déchets est équipée d'un bouchon 26 analogue au bouchon 13. Dans son puits central 27 peut pénétrer un organe d'obturation 28 muni à son extrémité d'un joint d'étanchéité 29 et traversé par un conduit central 30 pour le transfert des déchets. Un ressort de rappel 31 maintient ledit organe d'obturation en position fermée (figure 5) . Lors du fonctionnement de l'appareil, les déchets sont injectés par pression dans le conduit 30, l'organe d'obturation 28 étant enfoncé dans le puits 27 et clipsé sur le bouchon 26. Les déchets s'échappent alors dans la poche par l'orifice inférieur du conduit (figure 6). L'aération de la poche est assurée par un orifice 32 de l'organe d'obturation qui communique avec le puits central et l'intérieur de la poche par l'espace annulaire 33 subsistant entre le bouchon et l'organe d'obturation.

## Revendications

1. Dispositif comportant un boîtier distributeur de réactifs et un appareil notamment un analyseur hématologique, ledit boîtier qui renferme une pluralité de poches souples sans prise d'air, étant dimensionné pour s'adapter sur le côté de l'appareil et y assurer la connexion des poches de réactif par ouverture de leurs organes d'obturation, dans lequel, dans le même boîtier (1), sont disposées plusieurs poches rétractables (14) remplies de réactif, orientées vers le bas et dont les organes d'obturation (13) affleurent à la base dudit boîtier, ainsi qu'au moins une poche rétractable (15) destinée aux déchets et orientée vers le haut, ledit boîtier se placeant sur une plaque support horizontale (5) qui est positionnée de manière verticalement coulissable sur le côté de l'appareil et des mécanismes d'ouverture (7, 22) des organes d'obturation (13, 19) orientés vers le haut traversant des orifices (9) de ladite plaque support.

2. Dispositif selon la revendication 1, caractérisé en ce que les mécanismes d'ouverture des organes d'obturation sont des plots fixes (22) venant en appui contre un organe d'obturation (19) faisant office de clapet qui ferme un puits central (18) du bouchon (13).

3. Dispositif selon la revendication 2, caractérisé en ce que la tête de l'organe d'obturation (19) du puits (18) est équipée d'un joint torique (20) s'appuyant sur l'orifice profilé du puits.

4. Dispositif selon la revendication 1, caractérisé en ce qu'une patte articulée (8) est prévue au sommet de l'analyseur pour le maintien du boîtier distributeur de réactifs sur la plaque, et en ce que la patte sert de logement à un tuyau d'alimentation de la poche à déchets (15) dont le goulot (16) débouche à la partie supérieure du boîtier (1).

5. Dispositif selon les revendications 1 et 4, caractérisé en ce que le bouchon (26) de la poche à déchets (15) est muni d'un organe d'obturation

## Claims

1. Device comprising a reagent dispensing housing and an apparatus, in particular a blood analyser, said housing, which contains a multiplicity of flexible bags without air intakes, being dimensioned to fit onto the side of the apparatus and ensuring thereat the connection of the bags of reagent through the opening of their closing members, wherein, in the same housing (1), there are disposed several removable bags (14), filled with reagent, orientated downwards and the closing members (13) of which emerge at the base of said housing, as well as at least one removable bag (15) intended for waste and orientated upwards, with said housing being placed on a horizontal support plate (5) which is positioned so as to be able to slide vertically on the side of the apparatus, and with upwardly orientated opening mechanisms (7, 22) for the closing members (13, 19) passing through orifices (9) in said support plate.

2. Device according to claim 1, characterised in that the mechanisms for opening the closing members are fixed blocks (22) that come to bear against a closing member (19) serving as a shutter, which closes a central shaft (18) of the plug (13).

3. Device according to claim 2, characterised in that the head of the closing member (19) of the shaft (18) is equipped with an O ring (20) bearing upon the shaped orifice of the shaft.

4. Device according to claim 1, characterised in that a hinged paw (8) is provided at the top of the analyser to hold the reagent dispensing housing on the plate, and in that the paw serves to house a pipe for supplying the waste bag (15), the neck (16) of which emerges at the upper part of the housing (1).

5. Device according to claims 1 and 4, characterised in that the plug (26) of the waste bag (15) is provided with a closing member.

## Patentansprüche

1. Vorrichtung mit einem Gehäuse zur Abgabe von Reagenzien und einem Gerät, insbesondere einem Blutanalysator, wobei das genannte Gehäuse, das eine Vielzahl nachgiebiger Beutel ohne Luftloch umschließt, dimensioniert ist, um es an die Seite des Geräts anzupassen und dort den Anschluss der Reagenzien-Beutel durch Öffnung ihrer Verschlussorgane zu gewährleisten, bei der mehrere mit Reagenzien gefüllte zusammenziehbare Beutel (14), die nach unten ausgerichtet sind und deren Verschlussorgane (13) in den unteren Rand des genannten Gehäuses eingesetzt sind, sowie wenigstens ein zusammenziehbarer, für die Abfälle bestimmter Beutel (15), der nach oben ausgerichtet ist, in demselben Gehäuse (1) angeordnet sind, wobei das genannte Gehäuse auf einer horizontalen Tragplatte (5) sitzt, die auf der Seite des Geräts auf vertikal verschiebbare Weise angebracht ist, und nach oben gerichtete Öffnungsmechanismen (7, 22) der Verschlussorgane (13, 19), die Öffnungen (9) der genannten Tragplatte durchqueren.

2. Vorrichtung nach Anspruch 1, dadurch gekennzeichnet, dass die Öffnungsmechanismen der Verschlussorgane feststehende Dorne (22) sind, auf denen sich ein Verschlussorgan (19) abstützt, das als Ventil dient, welches einen zentralen Kanal (18) der Verschlusskappe (13) verschließt.

3. Vorrichtung nach Anspruch 2, dadurch gekennzeichnet, dass der Kopf des Verschlussorgans (19) des Kanals (18) mit einem Runddichtring (20) versehen ist, der sich auf der profilierten Öffnung des Kanals abstützt.

4. Vorrichtung nach Anspruch 1, dadurch gekennzeichhet, dass eine Gelenk-Klaue (8) oben am Analysator vorgesehen ist, um das Reagenzien-Abgabegehäuse auf der Platte festzuhalten, und dadurch, dass die Klaue als Sitz für eine Zuführungsleitung für den Abfallbeutel (15) dient, dessen Öffnung (16) am Oberteil des Gehäuses (1) mündet.

5. Vorrichtung nach den Ansprüchen 1 und 4, dadurch gekennzeichnet, dass die Verschlusskappe (26) des Abfallbeutels (15) mit einem Verschlussorgan versehen ist.
